# EUROPÄISCHE PATENTSCHRIFT

(11) **EP 1 762 135 B1**
(45) Veröffentlichungstag und Bekanntmachung des Hinweises auf die Patenterteilung: **16.12.2009**
(21) Anmeldenummer: 06450123.2
(22) Anmeldetag: 08.09.2006
(51) Int. Cl.: A01G 1/00, A01G 7/00

(54) **System zur Bearbeitung, Pflege und zum Management von Pflanzen**
System for treating, caring and managing plants
Système pour le traîtement, l'entretien et la gestion de plantes

(30) Priorität: 08.09.2005 AT 14612005
(43) Veröffentlichungstag der Anmeldung: 14.03.2007
(73) Patentinhaber: Dulnigg, Walter, 8010 Graz (AT)
(72) Erfinder: Moesenbacher, Markus, 8010 Graz (AT); Dulnigg, Walter, 8010 Graz (AT)
(74) Vertreter: Margotti, Herwig Franz

(56) Entgegenhaltungen:
- WO-A-02/15673
- WO-A-2004/023377
- JP-A- 2001 078 575

## Beschreibung

Die Erfindung bezieht sich auf ein System zur Bearbeitung, Pflege und zum Management von Pflanzen mit Hilfe von RFID Technologie, wobei an einer jeden zu bearbeitenden Pflanze ein Radio Frequency Identifying (RFID) Tag angebracht ist, der von einer RFID Antenne eines Lesers automatisch detektierbar ist.

Die maschinelle Bearbeitung von Pflanzen ist bekannt, siehe dazu beispielsweise die WO 02/15673 A1oder WO 2004/023377 A1. Allerdings muss bei den bekannten Pflanzenbearbeitungsverfahren die zu bearbeitende Pflanze manuell mit einer Pflanzenbearbeitungsmaschine anvisiert werden. Somit handelt es sich bei den bekannten Pflanzenbearbeitungsverfahren um manuelle Verfahren. Diese bringen insofern Nachteile mit sich, als sie von der Verlässlichkeit des Arbeiters abhängen und darüber hinaus aufgrund der lohnintensiven Arbeitsweise teuer sind.

Somit liegt der Erfindung die Aufgabe zugrunde, ein Pflanzenbearbeitungssystem bereitzustellen, bei dem eine Pflanzenbearbeitungsmaschine automatisch so ansteuerbar ist, dass markierte Pflanzen selektiv bearbeitet und gepflegt werden.

Die Erfindung löst diese Aufgabe durch ein Pflanzenbearbeitungssystem mit den Merkmalen des Anspruchs 1. Vorteilhafte Ausgestaltungen der Erfindung sind in den Unteransprüchen dargelegt.

Bei dem erfindungsgemäßen System zur Bearbeitung, Pflege und zum Management von Pflanzen ist an einer jeden zu bearbeitenden Pflanze ein Radio Frequency Identifying (RFID) Tag angebracht, der von einer RFID Antenne eines Lesegeräts, im Folgenden kurz als "Leser" bezeichnet, automatisch detektierbar ist. Erfindungsgemäß ist der Leser dazu ausgebildet, eine Pflanzenbearbeitungsmaschine, welche mit dem Leser kommuniziert, in Abhängigkeit von dem detektierten Tag selektiv zu aktivieren und die Pflanzenbearbeitungsmaschine zu veranlassen, die mit dem detektierten Tag versehene Pflanze gemäß den auf dem detektierten Tag gespeicherten Daten einem Arbeitsvorgang zu unterziehen.

Ist die Pflanze mit einem RFID Tag markiert, so ist es mit der beschriebenen Erfindung möglich, dass die Pflanzenbearbeitungsmaschine die Pflanze mit Hilfe des RFID Tags automatisiert anvisiert und den Bearbeitungsvorgang durchführt, was eine enorme Zeitersparnis mit sich bringt. Zusätzlich ermöglicht die automatisierte Bearbeitung der Pflanze, dass mehr als eine Pflanzenreihe in einem Arbeitsschritt durch die Pflanzenbearbeitungsmaschine behandelt werden kann, wodurch man auch Treibstoffkosten spart.

Der Arbeitsvorgang an einer Pflanze kann in Ausführungsformen der Erfindung selektives Düngen, selektives Ernten oder auch maschinelles Formschneiden eine Pflanze, wie es zum Beispiel bei Buchsbäumen üblich ist, beinhalten.

Der RFID Tag ist vorzugsweise in einer Schleife aus Papier, Kunststoff und/oder Textil integriert, die an der zu bearbeitenden Pflanze befestigt wird. Es ist weiters bevorzugt, den Tag bzw. diese Schleife gut sichtbar an der Pflanze zu befestigen. Der Tag ist aus dem Grund sichtbar montiert, um Informationen, wie zum Beispiel die Qualitätsklasse einer Pflanze, auch für den Menschen visuell erfassbar zu machen, indem die Schleife entsprechend der Qualität der Pflanze eine unterschiedliche Farbe aufweist. Gleichzeitig ist die Information über die Qualität im Tag gespeichert, damit sie auch maschinell erfassbar ist, was für die weitere logistische Verwendung vorteilhaft ist.

Außer der Qualität der Pflanze kann man auf dem Tag auch noch Informationen wie z.B. Herkunft der Pflanze, Empfänger der Pflanze nach der Ernte, Größe und Gewicht der Pflanze speichern. Es können marktübliche (IC) Tags jeglicher gebräuchlicher Frequenz verwendet werden. Für diese Anwendung kann entweder ein einfach oder mehrfach beschreibbarer (IC) Tag, ein nicht beschreibbarer (IC) Tag, oder ein Tag ohne IC verwendet werden. Letzterer ist insbesondere für einfachere Anwendungen und für Massenpflanzenzuchten einsetzbar, wo der Preis ein wesentliches Merkmal für die Anwendbarkeit der Erfindung ist. Auch wenn der RFID Tag nicht dazu ausgebildet ist, Daten zu übertragen, kann er eingesetzt werden, indem er lediglich eine Verstimmung der RFID Antenne (2) herbeiführt, wodurch die Pflanze, an der der RFID Tag angebracht ist, vom Leser erkannt werden kann.

Da die erfindungsgemäße maschinelle Detektierung und Auswahl von Pflanzen mit Hilfe der RFID Technologie viel weniger Zeit in Anspruch nimmt als die bekannte manuelle Selektion der zu bearbeitenden Pflanze, kann man dadurch die Pflanzenbearbeitung bzw. die Pflanzenpflege erheblich beschleunigen und die Kosten optimieren. Die automatisierte Selektion mit Hilfe der RFID Technologie im Vergleich zur visuellen Selektion durch einen Arbeiter erhöht zusätzlich die Bearbeitungsgenauigkeit und optimiert die Ausbeute. Zusätzlich kann der RFID Tag für Pflanzenstatistik, Pflanzenlogistik, Verkaufskontrolle, Inventur und Warenidentität verwendet werden.

Unter der Voraussetzung, dass der Tag einen IC beinhaltet, kann die im Tag vorhandene Information nach der Ernte für logistische Zwecke bis zur Endvermarktung der Pflanze verwendet werden.

In weiterer Ausgestaltung des erfindungsgemäßen Pflanzenbearbeitungssystems ist vorgesehen, dass der Leser während eines Bearbeitungsvorgangs, wie z.B. eines Verpackungsvorgangs, von Messeinrichtungen Signale empfängt, die Daten über Merkmale der Pflanze enthalten, wie die Größe oder das Gewicht. Der Leser ist dazu ausgebildet, die empfangenen Daten über die Pflanze in dem daran montierten RFID Tag zu speichern. Dadurch kann z.B. der größenabhängige Preis der Pflanze unter Berücksichtigung der Qualitätsklasse ermittelt werden. Gleichzeitig wird dabei ein Lieferschein über alle Pflanzen, die verpackt werden und in den gleichen Transportcontainer kommen, erstellt. Die Daten des Lieferscheins können zusätzlich auf einem (IC) Tag gespeichert werden, der auf dem Liefercontainer angebracht wird. Zur Sicherheit kann dieser (IC) Tag redundant ausgeführt werden. Dadurch ist es möglich, die Lieferscheindaten nicht nur visuell durch den Menschen, sondern auch maschinell zu erfassen. Die Lieferscheindaten können zum Beispiel bei der Lieferung über einen Handheldleser erfasst werden. Bei der Verpackung werden alle im Tag vorhandenen Daten in einer Datenbank gespeichert, was eine Übersicht über Herkunft, Qualität, Menge und Ziel der Ware erleichtert. Zusätzlich wird durch die maschinelle Erfassung jeder Pflanze die Kontrolle über die verpackte Ware bezüglich Anzahl und Qualität bedeutend verbessert, was eine höhere Ausbeute mit sich bringt.

Im Folgenden werden Ausführungsformen der Erfindung in nicht einschränkender Weise unter Bezugnahme auf die Zeichnungen näher erläutert.

Fig. 1 zeigt schematisch eine erste Ausführungsform des erfindungsgemäßen Pflanzenbearbeitungssystems.

Fig. 2 zeigt schematisch eine zweite Ausführungsform des erfindungsgemäßen Pflanzenbearbeitungssystems.

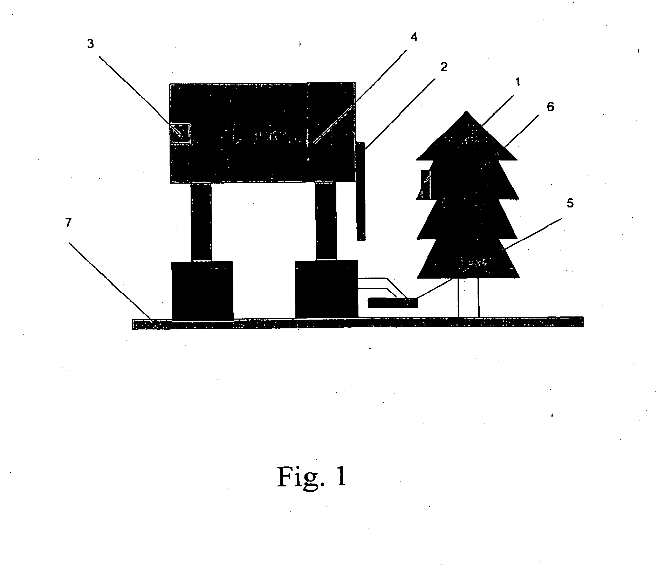

Zunächst wird auf die Fig. 1 Bezug genommen, die die einzelnen Elemente des erfindungsgemäßen Pflanzenbearbeitungssystems schematisch darstellt. Gemäß dem dargestellten Ausführungsbeispiel besteht die Erfindungsanordnung aus einem RFID IC Tag 1, welcher auf einer Pflanze 6 befestigt ist. Die Pflanze 6 wird mit Hilfe einer Antenne 2, die auf einer fahrbaren Pflanzenbearbeitungsmaschine 4 montiert ist, detektiert, wobei die Signale der Antenne 2 von dem Lesegerät 3 ausgewertet werden, wobei in das Lesegerät 3 auch eine Steuereinrichtung für die Pflanzenbearbeitungsmaschine 4 integriert ist. Die integrierte Leser- Steuereinrichtung 3 steuert den automatisch von der Pflanzenbearbeitungsmaschine 4 an der Pflanze 6 durchgeführten Arbeitsvorgang. Der Arbeitsvorgang kann zum Beispiel die Ernte der Pflanze 6 mit einer Säge 5 sein.

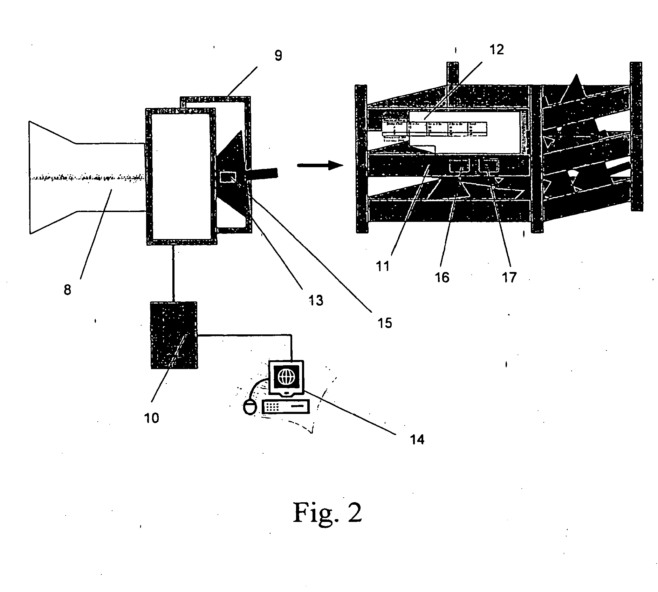

Nachfolgend wird unter Bezugnahme auf Fig. 2 eine zweite Ausführungsform des erfindungsgemäßen Pflanzenbearbeitungssystems erläutert, wobei in Fig. 2 jener Teil des erfindungsgemäßen Systems beispielhaft dargestellt ist, der die Verpackung, Vermessung und sonstige Datenerfassung an der Pflanze beinhaltet.

Gemäß dem in Fig. 2 dargestellten Ausführungsbeispiel umfasst die Erfindungsanordnung einen RFID IC Tag 15, welcher auf einer Pflanze 13 befestigt ist. Die Pflanze 13 wird mit Hilfe einer Antenne 9, die auf einer Verpackungsmaschine 8 befestigt ist, detektiert und von der Leser- und Steuereinrichtung 10 ausgewertet. Zusätzlich wird die bei der Verpackung ermittelte Größe der Pflanze in dem RFID IC Tag 15 abgespeichert. Die Leser- und Steuereinrichtung 10 übermittelt die erfassten Daten an ein Datenverarbeitungssystem 14, welches die Daten der Pflanze in einer Datenbank ablegt. Ist ein Transportcontainer 11 mit den Pflanzen 13 gefüllt, so wird ein Lieferschein 12 mit dem Inhalt jener Pflanzen erstellt, die sich im Container 11 befinden. Zusätzlich können die Daten des Lieferscheins auf einem RFID IC Tag 16 abgespeichert werden, welcher auf dem Container 11 angebracht wird. Um eine Absicherung der Daten zu erreichen, kann ein zweiter, redundanter RFID IC 17 auf dem Container 11 angebracht werden.

## Patentansprüche

1. System zur Bearbeitung, Pflege und zum Management von Pflanzen (6), wobei an einer jeden zu bearbeitenden Pflanze ein Radio Frequency Identifying (RFID) Tag (1) angebracht ist, der von einer RFID Antenne (2) eines Lesers (3) automatisch detektierbar ist, **dadurch gekennzeichnet, dass** der Leser (3) eine Pflanzenbearbeitungsmaschine, welche mit dem Leser (3) kommuniziert, in Abhängigkeit von dem detektierten Tag (1) selektiv aktiviert und die Pflanzenbearbeitungsmaschine veranlasst, die mit dem detektierten Tag (1) versehene Pflanze (6) gemäß den auf dem detektierten Tag (1) gespeicherten Daten einem Arbeitsvorgang zu unterziehen.

2. Pflanzenbearbeitungssystem nach Anspruch 1, **dadurch gekennzeichnet, dass** der von der Pflanzenbearbeitungsmaschine durchzuführende Arbeitsvorgang das Düngen von genau jenen Pflanzen (6) umfasst, die mit einem RFID Tag (1) markiert sind.

3. Pflanzenbearbeitungssystem nach Anspruch 1 oder 2, **dadurch gekennzeichnet, dass** der von der Pflanzenbearbeitungsmaschine durchzuführende Arbeitsvorgang das Ernten von genau jenen Pflanzen (6) umfasst, die mit einem RFID Tag (1) markiert sind.

4. Pflanzenbearbeitungssystem nach einem der vorhergehenden Ansprüche, **dadurch gekennzeichnet, dass** der RFID Tag (1) dazu ausgebildet ist, keine Daten zu übertragen, sondern lediglich eine Verstimmung der RFID Antenne (2) herbeizuführen, wodurch die Pflanze (6), an der der RFID Tag (1) angebracht ist, vom Leser (3) erkannt werden kann.

5. Pflanzenbearbeitungssystem nach einem der vorhergehenden Ansprüche, **dadurch gekennzeichnet, dass** der Leser (3) Tags (1) während des Verpackens von damit versehenen Pflanzen in einen Transportcontainer (11) erfasst und nach Abschluss des Verpackungsvorgangs für den Transportcontainer (11) automatisch einen Lieferschein (12) erstellt, der eine Auflistung der in dem Transportcontainer (11) befindlichen Pflanzen bzw. von auf dem Tag (1) gespeicherten Merkmalen enthält.

6. Pflanzenbearbeitungssystem nach einem der vorhergehenden Ansprüche, wobei der Leser während eines Bearbeitungsvorgangs, wie z.B. eines Verpackungsvorgangs, von Messeinrichtungen Signale empfängt, die Daten über Merkmale der Pflanze enthalten, wie die Größe oder das Gewicht, und der Leser (3) dazu ausgebildet ist, die empfangenen Daten über die Pflanze (13) in dem daran montierten RFID Tag (15) zu speichern.

7. Pflanzenbearbeitungssystem nach Anspruch 5, **dadurch gekennzeichnet, dass** die Daten des Lieferscheins (12) vom Leser (3) in einem RFID Tag (16) gespeichert werden, der am Transportcontainer (11) angebracht ist.

8. Pflanzenbearbeitungssystem nach Anspruch 7, **dadurch gekennzeichnet, dass** ein zusätzlicher, redundanter RFID Tag (17) am Transportcontainer (11) angebracht ist, in dem die Daten des Lieferscheins (12) speicherbar sind.

## Claims

1. A system for treating, cultivating and managing plants (6), wherein a Radio Frequency Identifying (RFID) tag (1) is attached to each plant to be treated, which tag is detectable automatically by an RFID antenna (2) of a reader (3), **characterized in that** the reader (3) selectively activates a plant treating machine communicating with the reader (3) depending on the detected tag (1) and prompts the plant treating machine to subject the plant (6) provided with the detected tag (1) to a working process according to the data stored in the detected tag (1).

2. A plant treating system according to claim 1, **characterized in that** the working process to be performed by the plant treating machine comprises the fertilizing of precisely those plants (6) which are labelled with an RFID tag (1).

3. A plant treating system according to claim 1 or 2, **characterized in that** the working process to be performed by the plant treating machine comprises the harvesting of precisely those plants (6) which are labelled with an RFID tag (1).

4. A plant treating system according to any of the preceding claims, **characterized in that** the RFID tag (1) is not designed for transmitting data, but merely for causing a detuning of the RFID antenna (2), whereby the plant (6) to which the RFID tag (1) is attached can be identified by the reader (3).

5. A plant treating system according to any of the preceding claims, **characterized in that** the reader (3) detects tags (1) while plants provided therewith are being packed into a transport container (11) and, upon completion of the packing process, automatically issues a delivery note (12) for the transport container (11), which delivery note contains a list of the plants located in the transport container (11) and of features stored in the tag (1), respectively.

6. A plant treating system according to any of the preceding claims, wherein, during a treatment process such as, e.g., a packing process, the reader receives signals from measuring facilities, which signals contain data regarding features of the plant such as size or weight, and the reader (3) is designed for storing the received data regarding the plant (13) in the RFID tag (15) mounted thereto.

7. A plant treating system according to claim 5, **characterized in that** the data of the delivery note (12) are stored by the reader (3) in an RFID tag (16) attached to the transport container (11).

8. A plant treating system according to claim 7, **characterized in that** an additional redundant RFID tag (17) is attached to the transport container (11), in which the data of the delivery note (12) are storable.

## Revendications

1. Système de traitement, de soin et de gestion de plantes (6), dans lequel une étiquette (1) d'identification à fréquence radio ("Radio Frequency Identification" - RFID) est placée sur chaque plante à traiter et peut être détectée automatiquement par l'antenne RFID (2) d'un lecteur (3),
**caractérisé en ce que**
en fonction de l'étiquette (1) détectée, le lecteur (3) active sélectivement une machine de traitement des plantes qui communique avec le lecteur (3) et amène la machine de traitement des plantes à appliquer sur la plante (6) dotée de l'étiquette (1) détectée une opération de travail en fonction des données conservées en mémoire sur l'étiquette (1) détectée.

2. Système de traitement de plantes selon la revendication 1, **caractérisé en ce que** l'opération de travail exécutée par la machine de traitement des plantes comprend l'apport d'engrais uniquement aux plantes (6) repérées par une étiquette RFID (1).

3. Système de traitement de plantes selon les revendications 1 ou 2, **caractérisé en ce que** l'opération de travail exécutée par la machine de traitement des plantes est la récolte des plantes (6) repérées par une étiquette RFID (1).

4. Système de traitement de plantes selon l'une des revendications précédentes, **caractérisé en ce que** l'étiquette RFID (1) est configurée pour ne pas transmettre de données mais uniquement amener un accord de l'antenne RFID (2), ce qui permet au lecteur (3) de reconnaître la plante (6) sur laquelle l'étiquette RFID a été placée.

5. Système de traitement de plantes selon l'une des revendications précédentes, **caractérisé en ce que** le lecteur (3) détecte les étiquettes (1) pendant le chargement des plantes qui en sont dotées dans un conteneur de transport (11) et **en ce qu'**après que l'opération de chargement est terminée, il établit automatiquement pour le conteneur de transport (11) un bordereau de livraison (12) qui contient la liste des plantes placées dans le conteneur de transport (11) et les caractéristiques conservées en mémoire sur l'étiquette (1).

6. Système de traitement de plantes selon l'une des revendications précédentes, dans lequel pendant une opération de traitement, par exemple une opération de chargement, le lecteur reçoit de dispositifs de mesure des signaux qui contiennent des données concernant les caractéristiques des plantes, par exemple leur taille ou leur poids, le lecteur (3) étant configuré pour placer en mémoire dans l'étiquette RFID (15) montée sur les plantes (13) les données qu'il a reçues à leur propos.

7. Système de traitement de plantes selon la revendication 5, **caractérisé en ce que** le lecteur (3) conserve en mémoire les données du bordereau de livraison (12) dans une étiquette RFID (16) placée sur le conteneur de transport (11).

8. Système de traitement de plantes selon la revendication 7, **caractérisé en ce qu'**une étiquette RFID (17) supplémentaire et redondante dans laquelle les données de bordereau de livraison (12) peuvent être conservées est placée sur le conteneur de transport (11).
